# DEMANDE DE BREVET EUROPEEN

(11) **EP 4 503 646 A1**
(43) Date de publication de la demande: **05.02.2025**
(21) Numéro de dépôt: 24189014.4
(22) Date de dépôt: 16.07.2024
(51) Int. Cl.: H04Q 9/00, G01R 31/08, G05B 23/02

(54) **PROCÉDÉ ET SYSTÈME D AIDE À LA PRIORISATION D'INTERVENTIONS DE MAINTENANCE DANS UN RÉSEAU DE DISTRIBUTION ÉLECTRIQUE**

(30) Priorité: 03.08.2023 FR 2308412
(71) Demandeur: Enedis, 92079 Paris La Defense Cedex (FR)
(72) Inventeur: MERSY, Paul, 69740 GENAS (FR); BILA, Matthieu, 69600 OULLINS (FR)
(74) Mandataire: Plasseraud IP

(57) **Abrégé**

Un procédé d'aide à la priorisation d'interventions de maintenance dans un réseau de distribution électrique comprenant une pluralité de capteurs (Cij) aptes à communiquer au sein du réseau comprend :
a. une détermination (21), pour au moins un capteur, d'une valeur de probabilité de succès d'une intervention de maintenance à distance, à partir d'un modèle de prédiction alimenté par une pluralité de variables (Vij) représentatives d'un lien de communication du capteur au sein du réseau ;
b. pour au moins un capteur présentant un dysfonctionnement de communication, une collecte de données contextuelles (D_{ctxt}(ij)) ;
c. une analyse (22) des données contextuelles pour affecter au capteur une typologie de dysfonctionnement ;
d. une transmission, à destination d'une IHM (23), de la valeur de probabilité de succès d'intervention à distance et de la typologie de dysfonctionnement, pour restitution à un humain pour décider d'au moins une intervention de maintenance prioritaire.

## Description

### Domaine technique

La présente divulgation relève du domaine des réseaux de distribution électrique équipés de compteurs communicants. Plus précisément, la présente divulgation concerne la gestion et la maintenance d'un parc de tels compteurs communicants, à des fins notamment d'optimisation de son niveau de performance.

### Technique antérieure

Un compteur communicant est un compteur disposant de technologies dites AMR (pour l'anglais « Automated Meter Reading », en français « relevé automatique des compteurs ») qui mesure de manière détaillée et précise, en temps réel, une consommation d'électricité, et est configuré pour transmettre ces données de mesure au gestionnaire du réseau de distribution électrique chargé du comptage.

Certains de ces compteurs communicants sont en outre programmables à distance et équipés d'un appareil de coupure à distance ; on parle alors d'une technologie dite « AMM » (pour l'anglais « *Advanced Meter Management* »*,* en français « *Gestion avancée des compteurs* »)*.* L'introduction de tels compteurs communicants dans les réseaux de distribution permet leur évolution vers des « réseaux intelligents » (en anglais « smart grids »).

Les compteurs communicants permettent également d'effectuer certaines opérations à distance, sans qu'un technicien ne se déplace, ni que le client soit présent. Ils permettent également d'améliorer et d'accélérer les diagnostics en cas de dysfonctionnement d'une installation électrique. En éliminant les tâches manuelles de relève, de changement de puissance, de coupure ou de remise en service, ces compteurs permettent une diminution des coûts de distribution de l'énergie et des délais d'intervention et contribuent, pour le gestionnaire du réseau, à garantir un équilibre entre l'offre et la demande.

En effet, pour répondre aux problématiques croissantes d'optimisation de l'équilibre énergétique et de la réduction du bilan carbone, les gestionnaires des réseaux de distribution électrique doivent faire face à des objectifs de plus en plus stricts, notamment pendant les pics de consommation électrique des périodes hivernales. Pour répondre à ces objectifs, il est nécessaire qu'ils puissent procéder à des opérations de délestage ciblées, en réalisant des coupures d'approvisionnement locales avec une granularité fine, et à des opérations ponctuelles d'écrêtement de puissance, qui consistent par exemple à écrêter la puissance d'une installation cliente à 20 ou 30% de la puissance souscrite, pendant une période courte de quelques heures, pour éviter l'occurrence d'un blackout généralisé (en français « panne de courant ») sur tout ou partie du réseau de distribution.

Ces opérations sont rendues possible grâce à la généralisation dans le réseau de distribution des compteurs communicants, qu'il est possible de piloter de manière individuelle, par coupure à distance ou envoi d'une consigne d'écrêtement de puissance depuis le système d'information central du gestionnaire du réseau. La communication avec les compteurs peut s'opérer par divers canaux.

Dans le réseau de distribution électrique français opéré par Enedis^{®}, les compteurs communicants sont organisés en grappes de compteurs connectés à un même concentrateur formant un étage intermédiaire entre le système d'information central et les compteurs de la grappe qu'il a la charge de piloter. La communication entre les compteurs d'une grappe et le concentrateur auquel ils sont attachés s'opère par une technologie de Courant Porteur en Ligne, CPL. La technologie CPL forme alors un premier niveau de communication, sur le réseau basse tension. Selon la configuration géographique et la densité du maillage du réseau de distribution, un concentrateur peut ainsi piloter une grappe de 1 à 1400 compteurs environ. Il est généralement installé dans un poste de transformation et de distribution HTA/BT (Haute Tension A/Basse Tension).

Parmi ses différentes fonctions, le concentrateur joue notamment le rôle de relais de communication entre les compteurs de la grappe et le système d'information central, avec lequel il communique par ondes radio, par exemple via les réseaux de téléphonie mobile de type 2G, 3G, 4G ou plus, qui constituent un deuxième niveau de communication. Le concentrateur constitue ainsi une passerelle entre le réseau de communication CPL et les réseaux des opérateurs de télécommunication.

Le réseau de distribution électrique français repose à ce jour sur un parc d'environ 35 millions de compteurs communicants, dont le niveau de performance est fortement tributaire de la performance du lien de communication des compteurs avec le système d'information central.

En effet, lorsque le lien communicant est rompu, les avantages d'un système opéré à distance (ou encore, téléopéré) disparaissent, notamment les prestations réalisées rapidement et sans contrainte pour les clients. L'absence prolongée de communication de compteurs et les difficultés à les téléopérer sont complexes à diagnostiquer et entraînent :
- des sollicitations quotidiennes aux techniciens experts du réseau de distribution ;
- un délai supplémentaire dans la réalisation des prestations d'intervention ;
- une dégradation de la qualité des services à valeur ajoutée.

Il existe donc un besoin d'une technique permettant de maintenir le niveau de performance d'un parc de compteurs communicants, en détectant automatiquement d'éventuels dysfonctionnements de communication et en caractérisant la typologie de dysfonctionnement, de façon à permettre de prioriser de manière efficace des interventions de maintenance sur le parc de compteurs.

### Résumé

La présente divulgation vient répondre à ce besoin.

Il est proposé un procédé d'aide à la priorisation d'interventions de maintenance dans un réseau de distribution électrique, mis en oeuvre par des moyens informatiques, le réseau de distribution électrique comprenant une pluralité de capteurs aptes à communiquer au sein du réseau, comprenant :
a. une détermination, pour au moins un capteur de la pluralité de capteurs, d'une valeur de probabilité de succès d'une intervention de maintenance à distance sur le ou les capteur(s), à partir d'un modèle de prédiction alimenté par une pluralité de variables représentatives d'un lien de communication du ou des capteur(s) au sein du réseau ;
b. pour au moins un capteur de la pluralité de capteurs présentant un dysfonctionnement de communication, une collecte de données contextuelles relatives au capteur ;
c. une analyse des données contextuelles collectées pour affecter, au capteur présentant un dysfonctionnement de communication, une typologie de dysfonctionnement, en fonction des données contextuelles analysées ;
d. une transmission, à destination d'une interface homme-machine, de la valeur de probabilité de succès d'intervention à distance et de la typologie de dysfonctionnement affectée au(x) capteur(s), pour restitution à un humain pour décider d'au moins une intervention de maintenance prioritaire sur l'un au moins des capteurs de la pluralité de capteurs.

Selon un autre aspect, il est proposé un système informatique d'aide à la priorisation d'interventions de maintenance dans un réseau de distribution électrique, le réseau de distribution électrique comprenant une pluralité de capteurs aptes à communiquer au sein du réseau, le système informatique comprenant au moins un processeur configuré pour exécuter des étapes de :
a. détermination, pour au moins un capteur de la pluralité de capteurs, d'une valeur de probabilité de succès d'une intervention de maintenance à distance sur le ou les capteur(s), à partir d'un modèle de prédiction alimenté par une pluralité de variables représentatives d'un lien de communication du ou des capteur(s) au sein du réseau ;
b. collecte de données contextuelles relatives à au moins un capteur de la pluralité de capteurs présentant un dysfonctionnement de communication ;
c. analyse des données contextuelles collectées pour affecter, au capteur présentant un dysfonctionnement de communication, une typologie de dysfonctionnement, en fonction des données contextuelles analysées ;
d. transmission, à destination d'une interface homme-machine, de la valeur de probabilité de succès d'intervention à distance et de la typologie de dysfonctionnement affectée au(x) capteur(s), pour restitution à un humain pour décider d'au moins une intervention de maintenance prioritaire sur l'un au moins des capteurs de la pluralité de capteurs.

Selon un autre aspect, il est proposé un programme informatique comportant des instructions pour la mise en oeuvre de tout ou partie d'un procédé tel que défini dans les présentes lorsque ce programme est exécuté par un processeur.

Selon un autre aspect, il est proposé un support d'enregistrement non transitoire, lisible par un ordinateur, sur lequel est enregistré un tel programme.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé d'aide à la priorisation d'interventions de maintenance précité.

Les caractéristiques exposées dans les paragraphes suivants peuvent, optionnellement, être mises en oeuvre, indépendamment les unes des autres ou en combinaison les unes avec les autres :
Les variables représentatives d'un lien de communication du ou des capteur(s) appartiennent au groupe comprenant :
- des variables d'état du ou des capteur(s) au sein du réseau ;
- des variables d'état d'un concentrateur auquel est(sont) rattaché(s) le ou les capteur(s) au sein du réseau ;
- des variables d'état d'un lien communicant entre le ou les capteur(s) et le concentrateur auquel il est rattaché ;
- des variables de collecte du ou des capteur(s) ;
- des variables de collecte du concentrateur auquel est(sont) rattaché(s) le ou les capteur(s) ;
- des variables de découverte du ou des capteur(s)au sein d'un réseau local de communication avec le concentrateur auquel il est rattaché ;
- des variables de redémarrage (en anglais « reboot ») du concentrateur auquel est(sont) rattaché(s) le ou les capteur(s) ;
- des variables représentatives d'une couverture radio du réseau de communication étendu auquel appartient le concentrateur auquel est(sont) rattaché(s) le ou les capteur(s).

La valeur de probabilité de succès d'une intervention de maintenance à distance est un indicateur de télé-opérabilité apte à prendre une valeur parmi :
- une valeur de télé-opérabilité médiocre ;
- une valeur de télé-opérabilité moyenne ;
- une valeur de télé-opérabilité bonne ;
- une valeur de télé-opérabilité excellente.

L'analyse des données contextuelles collectées met en oeuvre un algorithme par élimination à partir d'un corpus de capteurs présentant un dysfonctionnement de communication, et l'une des typologies de dysfonctionnement délivrée en sortie de l'algorithme est une probabilité de défaillance matérielle du ou des capteur(s).

Le corpus de capteurs comprend l'ensemble des capteurs non-collectant depuis un nombre de jours déterminé.

Les données contextuelles collectées appartiennent au groupe comprenant :
- des données relatives à une performance de communication de capteurs d'une grappe de capteurs à laquelle appartien(nen)t le ou les capteur(s) présentant un dysfonctionnement de communication ;
- des données relatives à au moins un événement de communication du ou des capteur(s) survenu au cours du nombre de jours déterminé ;
- des données relatives à une situation contractuelle du ou des capteur(s) présentant un dysfonctionnement de communication ;
- des données relatives à une intervention matérielle sur le ou les capteur(s) présentant un dysfonctionnement de communication.

Les capteurs sont des compteurs électriques communicants.

### Brève description des dessins

D'autres caractéristiques, détails et avantages apparaîtront à la lecture de la description détaillée ci-après, et à l'analyse des dessins annexés, sur lesquels :
**Fig. 1**

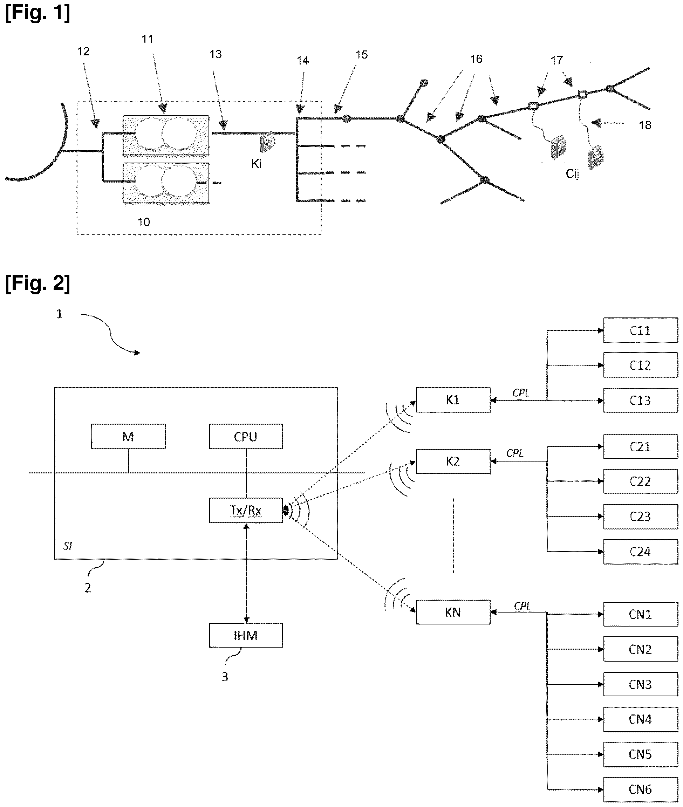

   [Fig. 1] présente sous forme de schéma synoptique un réseau de distribution électrique, de l'arrivée HTA jusqu'au raccordement final chez le client.
**Fig. 2**
   [Fig. 2] représente sous forme schématique la chaîne communicante d'un réseau de distribution électrique selon un mode de réalisation.
**Fig. 3**

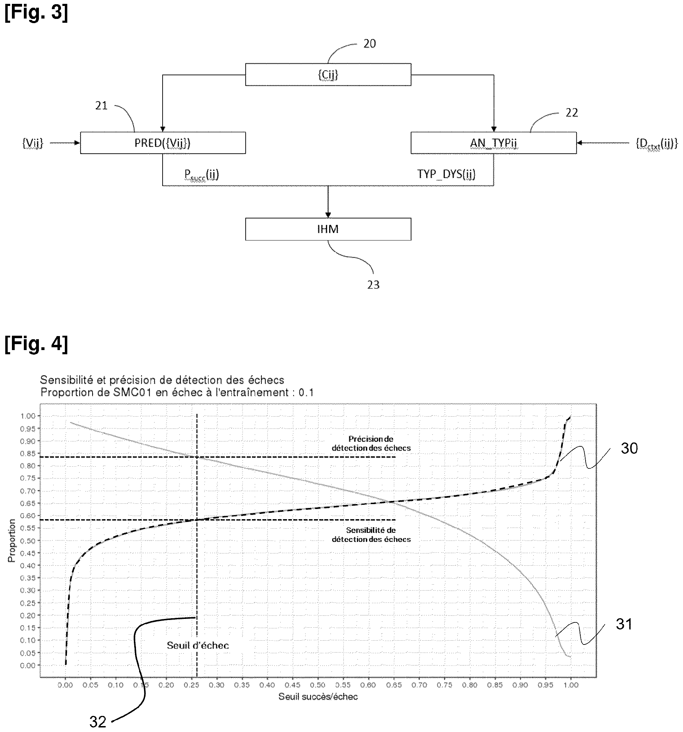

   [Fig. 3] présente un organigramme des traitements effectués par le CPU de l'unité de traitement du système d'information central de la figure 1 selon un mode de réalisation.
**Fig. 4**
   [Fig. 4] montre les courbes de sensibilité et de précision de détection d'échecs, utilisées pour choisir un modèle de prédiction de succès de télé-opération selon un mode de réalisation.
**Fig. 5**

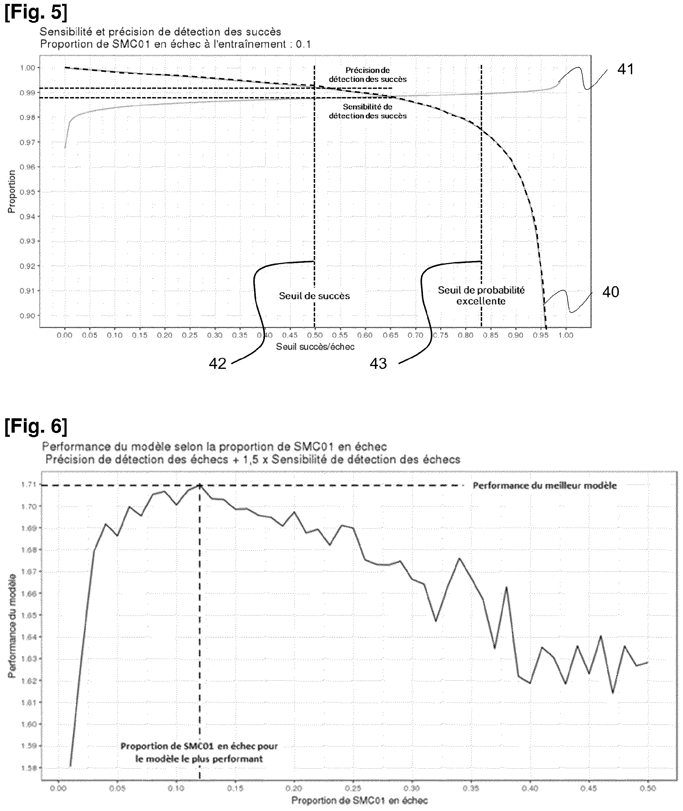

   [Fig. 5] montre les courbes de sensibilité et de précision de détection de succès, utilisées pour choisir un modèle de prédiction de succès de télé-opération selon un mode de réalisation.
**Fig. 6**
   [Fig. 6] montre une courbe représentative d'une performance des modèles de prédiction, en fonction d'une proportion de téléopérations en échec, selon un mode de réalisation.
**Fig. 7**

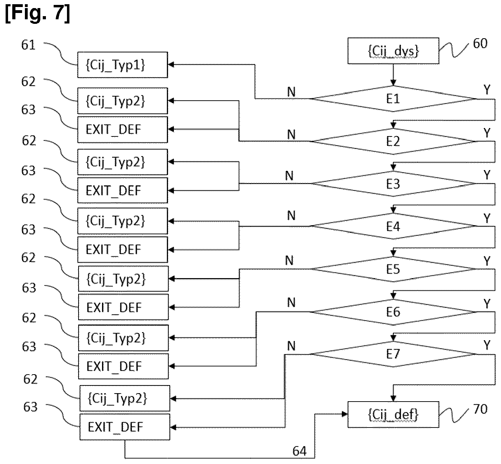

   [Fig. 7] montre un organigramme synthétique d'un algorithme de détermination d'une typologie de dysfonctionnement des compteurs selon un mode de réalisation.

### Description des modes de réalisation

La technique de la présente divulgation repose sur une approche tout à fait nouvelle et inventive de l'optimisation des performances d'un parc de capteurs dans un réseau de distribution électrique. En effet, elle repose sur la détermination conjointe de deux paramètres importants pour optimiser la gestion des interventions de maintenance sur un tel parc, à savoir :
- la probabilité de succès d'une intervention de maintenance à distance sur un capteur, qui fournit une indication intéressante quant à l'opportunité ou non de faire déplacer un technicien pour intervenir sur un capteur présentant un dysfonctionnement de communication ;
- une typologie de dysfonctionnement du capteur, qui permet notamment d'identifier si un dysfonctionnement de communication d'un capteur résulte d'une défaillance matérielle du capteur ou d'un contexte environnemental par exemple. Cette typologie de dysfonctionnement peut avantageusement être prise en compte pour décider de l'opportunité ou de la nécessité de déplacer un technicien pour une intervention sur le capteur.

Une telle technique est avantageusement mise en oeuvre dans le système d'information du parc de capteurs du réseau de distribution électrique, ce système d'information comprenant des moyens de communication avec l'ensemble des capteurs du parc, pour la collecte de données de mesure et de données contextuelles, et un ou plusieurs processeurs configurés pour calculer une probabilité de succès d'une intervention de maintenance à distance sur la base d'un algorithme prédictif reposant par exemple sur une méthode d'amplification de gradient de type XGBoost, et pour déterminer une typologie de dysfonctionnement d'un capteur présentant un dysfonctionnement de communication.

Ces deux paramètres, qui sont transmis par le système d'information pour être présentés sur une interface homme-machine, permettent au personnel du gestionnaire du réseau de distribution électrique, et notamment au personnel non-expert, d'opérer un diagnostic rapide et fiable des défaillances constatées sur le parc de capteurs.

La détermination et la transmission de ces deux paramètres a pour premier effet technique de permettre d'identifier les interventions de maintenance strictement nécessaires, car correspondant à une défaillance matérielle du capteur qui nécessite le déplacement d'un technicien, et au contraire, d'éviter tout déplacement inutile du technicien, par exemple quand la probabilité de succès d'une intervention de maintenance à distance est élevée et que le dysfonctionnement ne résulte pas d'une défaillance matérielle du capteur. On peut ainsi optimiser le planning d'interventions des techniciens, donc réduire le temps d'attente avant une intervention strictement nécessaire, en écartant tous les cas d'interventions inutiles. Cela a également pour effet de réduire le bilan carbone du gestionnaire du réseau de distribution électrique, en évitant des déplacements inutiles des techniciens d'intervention et en optimisant la gestion du parc automobile mis à leur disposition et la consommation de carburant résultante.

La détermination et la transmission de ces deux paramètres a également pour effet technique d'améliorer l'efficacité des interventions de maintenance sur le parc de capteurs, et donc de maintenir un niveau de performance du parc optimal, qui soit capable de satisfaire en toutes circonstances les objectifs de délestage et d'écrêtement de puissance, grâce à des télé-opérations ciblées sur les capteurs.

Il est maintenant fait référence à la figure 1, qui présente sous forme de schéma synoptique la structure d'un réseau de distribution électrique basse tension, de l'arrivée haute tension A jusqu'au raccordement final du client.

Un poste de transformation HTA/BT référencé 10 comprend un ou plusieurs transformateurs HTA/BT 11, qui sont alimentés en entrée par l'arrivée HTA référencée 12 (typiquement de l'ordre de 20000V environ) et permettent d'abaisser la tension de l'électricité distribuée, en fournissant en sortie un dipôle source BT (basse tension) référencé 13. Un tel poste de transformation HTA/BT 10 héberge généralement un concentrateur Ki, auquel est associé un tableau basse tension référencé 14. Chaque ligne en sortie du tableau correspond à un départ basse tension, ou départ BT, référencé 15 (i.e. une branche de l'étoilement derrière le tableau basse tension). Un ou plusieurs tronçons BT (i.e. portion(s) du réseau basse tension) référencés 16 permettent de relier un départ BT 15 à un ou plusieurs branchements référencés 17. Un raccordement référencé 18 (défini comme un point du réseau basse tension sur lequel est connectée l'installation du client) relie un branchement 17 à un compteur communicant Cij.

La figure 2 représente sous forme schématique la chaîne communicante 1 du réseau de distribution électrique de la figure 1, qui comprend :
- un système d'information central SI référencé 2 ;
- une pluralité de concentrateurs référencés K1, K2, ..., KN, qui communiquent par voie radio avec le SI référencé 2 ;
- une pluralité de capteurs Cij, où i fait référence au concentrateur Ki auquel un capteur Cij est rattaché, et où j fait référence à un indice du capteur Cij dans la grappe de capteurs pilotés par le concentrateur Ki.

Dans la suite, on s'attachera à décrire un exemple particulier de réalisation, dans lequel les capteurs considérés sont des compteurs communicants ; par exemple, dans le cas du réseau de distribution électrique français, des compteurs Linky^{®}. Dans la suite, on pourra désigner par le terme de capteur, ou de compteur, ou encore de compteur communicant, un tel capteur d'un réseau de distribution électrique, configuré pour opérer des mesures de consommation électrique d'une installation cliente, pour les transmettre directement ou indirectement à un système d'information central du réseau de distribution électrique, et programmable à distance par ce dernier.

On rappelle qu'un concentrateur Ki est un ordinateur industriel, installé dans un poste de transformation HTA/BT 10, qui a la charge de piloter une grappe de 1 à 1400 compteurs communicants Cij. A titre de simple exemple illustratif, et non limitatif, on a représenté sur la figure 1 une grappe de trois compteurs référencés C11 à C13 pour le concentrateur K1, une grappe de quatre capteurs référencés C21 à C24 pour le concentrateur K2, et une grappe de six capteurs référencés CN1 à CN6 pour le concentrateur KN.

Dans l'exemple de la figure 1, la communication au sein d'une grappe entre un concentrateur Ki et les compteurs communicants Cij repose sur une technologie de courant porteur en ligne, de génération G1 ou G3 par exemple. La communication entre un concentrateur Ki et le système d'information central SI référencé 2 repose sur une transmission par ondes radio, par exemple par un réseau de radiocommunications mobiles de type 2G, 3G, 4G, ou à l'avenir 5G ou au-delà, d'un opérateur de télécommunication.

Le système d'information SI référencé 2 comprend, classiquement, des mémoires M associées à un, ou plusieurs, processeur(s) CPU. Les mémoires peuvent être de type ROM (de l'anglais « Read Only Memory ») ou RAM (de l'anglais « Random Access Memory ») ou encore Flash. Elles permettent notamment le stockage des données reçues en provenance des concentrateurs Ki par le module d'émission réception Tx/Rx du système d'information. Ce module d'émission réception Tx/Rx pilote par ailleurs la transmission, vers une interface homme machine IHM référencée 3, des différents indicateurs et paramètres déterminés et calculés par le processeur CPU, comme on le verra plus en détail par la suite en relation avec la figure 3.

On notera que le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

Plus généralement, un tel système d'information SI référencé 2 comprend une mémoire vive (par exemple une mémoire RAM), une unité de traitement équipée par exemple d'un processeur CPU, et pilotée par un programme d'ordinateur, représentatif du procédé d'aide à la priorisation d'interventions de maintenance, stocké dans une mémoire morte (par exemple une mémoire ROM ou un disque dur). A l'initialisation, les instructions de code du programme d'ordinateur sont par exemple chargées dans la mémoire vive avant d'être exécutées par le processeur CPU de l'unité de traitement. La mémoire vive contient notamment différentes variables représentatives des liens de communication des capteurs Cij au sein de la chaîne communicante référencée 1, ainsi que des données contextuelles collectées dans la chaîne communicante 1. Le processeur de l'unité de traitement pilote l'exécution d'un modèle de prédiction pour la détermination de valeurs de probabilité de succès d'une intervention de maintenance à distance sur les compteurs communicants Cij, ainsi que l'analyse des données contextuelles stockées dans la mémoire vive pour affecter, à chacun des compteurs Cij présentant un dysfonctionnement de communication, une typologie de dysfonctionnement. Il pilote également la transmission, par le module d'émission/réception Tx/Rx, des paramètres qu'il a calculés, vers l'IHM référencée 3, qui peut prendre par exemple la forme d'une application web.

La figure 2 illustre seulement une manière particulière, parmi plusieurs possibles, de réaliser le système d'information SI référencé 2, afin qu'il effectue les étapes du procédé détaillé ci-après, en relation avec la figure 3 (dans l'un quelconque des différents modes de réalisation, ou dans une combinaison de ces modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

On présente désormais, en relation avec la figure 3, les traitements effectués par le CPU de l'unité de traitement du SI référencé 2, dans un mode de réalisation.

On considère un corpus {Cij} de compteurs communicants, tels qu'illustrés par exemple en figure 2. A partir de ce corpus de capteurs, deux indicateurs principaux sont déterminés :
- un indicateur de probabilité de succès d'une télé-opération P_{SUCC}(ij) ;
- dans le cas d'un capteur Cij présentant un dysfonctionnement de communication, une typologie de dysfonctionnement TYP_DYS(ij), qui peut prendre la forme, dans un mode de réalisation simplifié, d'un indicateur de probabilité forte de défaillance matérielle du compteur communicant Cij.

On s'attache tout d'abord ci-dessous à décrire plus en détail l'étape référencée 21 de détermination d'une valeur de probabilité de succès d'une télé-opération P_{SUCC}(ij) sur un compteur Cij, notée PRED({Vij}). Cette étape PRED({Vij}) référencée 21 repose sur un algorithme de science des données (en anglais « data science), par exemple du type à accélérateur de gradient (i.e. XGBoost), alimenté en entrée par un ensemble de variables {Vij} représentatives du fonctionnement de la chaîne communicante 1, que l'on peut regrouper en domaines suivants :
- l'état dans la chaîne communicante (posé, découvert, ...) des compteurs Cij et des concentrateurs Ki ;
- le lien communicant entre le compteur Cij et le concentrateur Ki ;
- la collecte des compteurs Cij ;
- la collecte des concentrateurs Ki ;
- la découverte des compteurs Cij ;
- le « reboot » (en français, redémarrage) des concentrateurs Ki ;
- la couverture WAN (pour l'anglais « Wide Area Network », en français, réseau de communication étendu) du concentrateur Ki (session radius).

Ces variables permettent de représenter de manière exhaustive tous les aspects du fonctionnement de la chaîne communicante 1 et constituent un ensemble de données pertinentes pour alimenter le modèle de prédiction PRED({Vij}).

On rappelle que le terme « collecte » désigne le relevé cyclique quotidien des données de consommation électrique d'une installation cliente mesurées par un compteur Cij ; le terme « découverte » (en anglais, « discovery »), désigne quant à lui le processus d'intégration d'un compteur Cij dans le réseau local PAN (pour l'anglais « Private Area Network ») reliant le concentrateur Ki à l'ensemble des compteurs Cij de sa grappe.

Sans être ici exhaustif quant à l'ensemble des variables {Vij} qui peuvent être prises en compte pour alimenter le modèle de prédiction, on peut indiquer, à titre d'exemple seulement, que les variables représentatives du lien communicant entre le compteur Cij et le concentrateur Ki peuvent comprendre par exemple des indicateurs de proportion de temps où le lien Cij-Ki courant est étiqueté inexistant, fidélisé ou sécurisé ; de même, les variables représentatives de la collecte des concentrateurs Ki peuvent comprendre par exemple un nombre de concentrateurs distincts ayant collecté un index ou une puissance maximale des compteurs Cij, une durée en heures avant la lecture de l'index par le concentrateur, ou encore une moyenne de la durée quotidienne en heures avant lecture de la puissance maximum d'un compteur Cij par le concentrateur Ki. Ces différentes variables dépendent notamment de l'organisation du système d'information du gestionnaire du réseau de distribution électrique, et on comprend que la fiabilité et la précision du modèle de prédiction de la probabilité de succès de la télé-opération dépendent notamment du volume et de la diversité des variables {Vij} qui l'alimentent.

Pour construire un modèle de prédiction efficace, il est possible de procéder à un pré-traitement des données {Vij}, pour éliminer notamment du jeu de variables des variables non-significatives.

Afin de construire le modèle le plus performant possible, différents modèles sont entraînés sur des données d'entraînement et ensuite testés sur des données de test. Ainsi, on fait par exemple varier la proportion des services en échec dans les données d'entraînement par itération, entre 1 % et 50% par pas de 1%. A chacune des itérations, un modèle XGBoost est construit avec l'ensemble des indicateurs définis ci-dessus. Les performances sont testées pour chacun des modèles avec un seuil succès/échec variant par itération de 0 à 100% par pas de 1%. On calcule pour chaque modèle construit et pour chaque seuil succès/échec les métriques suivantes :
- la précision de détection des échecs de téléopération ;
- la sensibilité de détection des échecs de téléopération ;
- la précision de détection des succès de téléopération ;
- la sensibilité de détection des succès de téléopération ;
- la performance de détection des échecs définie comme suit : précision de détection des échecs + 1,5 x sensibilité de détection des échec (cette formule permet de favoriser la sensibilité sur la précision).

Ces dernières métriques permettent d'obtenir pour un modèle XGBoost avec une proportion donnée de télé-opérations en échec (par exemple, une télé-opération courante permettant de programmer les compteurs communicants, et appelée SMC01 pour « Service Métier Comptage » dans le réseau Enedis^{®}), des courbes de précision et de sensibilité pour la détection des succès et des échecs, illustrées en figures 4 et 5. Ainsi, la figure 4 présente les courbes de sensibilité (courbe référencée 30) et de précision (courbe référencée 31) pour la détection des échecs, dans le cas d'une proportion de SMC01 en échec à 1 0% dans l'échantillon d'entraînement ; la figure 5 présente les courbes de sensibilité (courbe référencée 40) et de précision (courbe référencée 41) pour la détection des succès, dans le cas d'une proportion de SMC01 en échec à 10% dans l'échantillon d'entraînement.

En calculant l'accélération de ces courbes, il est possible de déterminer les trois seuils suivants :
- un seuil d'échec, référencé 32 : premier seuil succès/échec dans l'ordre croissant pour lequel l'accélération de la sensibilité de la détection des échecs change de signe et est strictement inférieure à 20 en valeur absolue pour la sixième fois ;
- un seuil de succès, référencé 42 : premier seuil succès/échec dans l'ordre décroissant pour lequel l'accélération de la sensibilité de la détection des succès change de signe et est strictement inférieure à 20 en valeur absolue pour la sixième fois ;
- un seuil de probabilité de succès excellente, référencé 43 : premier seuil succès/échec dans l'ordre décroissant pour lequel l'accélération de la précision de la détection des succès change de signe et est strictement inférieure à 20 en valeur absolue pour la sixième fois.

La sélection du sixième changement de signe de l'accélération, dans l'ordre croissant ou décroissant, permet de se placer après la forte augmentation de sensibilité pour la détection des échecs et avant la forte chute de sensibilité pour la détection des succès. Dans le cas du seuil d'échec référencé 32, la méthode de détermination de cette valeur vise à détecter les échecs de manière performante. Pour le seuil de succès référencé 42, la méthode se concentre sur la détection des succès avec une excellente précision et une grande sensibilité. Enfin, la méthode de détermination du seuil de probabilité de succès excellente, référencé 43, permet de définir le niveau à partir duquel la détection des succès offre une très grande précision.

On obtient alors trois seuils qui définissent les plages de télé-opérabilité (médiocre, moyenne, bonne et excellente) pour chaque modèle avec une proportion de télé-opération (par exemple, SMC01) en échec donnée.

Le modèle sélectionné est celui pour lequel la performance de détection des échecs, définie ci-dessus, est la plus élevée, comme illustré en figure 6.

A l'issue d'une phase d'entraînement du modèle de prédiction sélectionné, il est utilisé lors de l'étape référencée 21, pour déterminer, pour chaque compteur Cij du corpus de départ référencé 20, une probabilité de succès d'une opération d'intervention de maintenance à distance, encore appelé probabilité de succès de télé-opération, et notée P_{SUCC}(ij).

Dans un mode de réalisation, cette probabilité P_{SUCC}(ij) prend quatre valeurs discrètes distinctes :
- excellente, pour une probabilité P_{SUCC}(ij) supérieure à un seuil « seuil_excel » 43 de probabilité de succès excellente définissant la limite entre la zone de télé-opérabilité bonne et la zone de télé-opérabilité excellente ;
- médiocre, pour une probabilité P_{SUCC}(ij) inférieure à un seuil « seuil_ech » 32 d'échec définissant la limite entre la zone de télé-opérabilité médiocre et la zone de télé-opérabilité moyenne ;
- moyenne, pour une probabilité P_{SUCC}(ij) supérieure au seuil d'échec « seuil_ech » 32 et inférieure à un seuil « seuil_succ » 42 de succès définissant la limite entre la zone de télé-opérabilité moyenne et la zone de télé-opérabilité bonne ;
- bonne, pour une probabilité P_{SUCC}(ij), supérieure au seuil « seuil_succ » 42 de succès et inférieure au seuil « seuil_excel » 43 de probabilité de succès excellente.

La restitution 23 à un utilisateur non-expert, sur une interface homme-machine IHM, d'une de ces quatre valeurs discrètes, correspondant aux quatre plages de télé-opérabilité (médiocre, moyenne, bonne et excellente), offre une information simple et directement accessible quant aux chances de succès d'une intervention de maintenance à distance.

On présente désormais plus en détail les traitements effectués par le processeur CPU du système d'information central lors de l'étape référencée 22 d'analyse de la typologie de dysfonctionnement d'un compteur AN_TYPij.

Les dysfonctionnements de compteurs identifiés par les supervisions du système d'information central sont majoritairement issus d'alarmes remontées par des compteurs non silencieux. Cependant, une part non négligeable des compteurs non communicants présente des dysfonctionnements qu'il est intéressant de caractériser pour ensuite les traiter correctement : bruit CPL, dysfonctionnement du concentrateur, coupure du coupe-circuit principal individuel (CCPI), ...

Au sein d'un corpus de compteurs présentant un dysfonctionnement de communication, identifier le ou les compteurs présentant une forte probabilité de défaillance a pour objectif d'identifier des dysfonctionnements imputables au compteur, et qui nécessitent une maintenance.

Dans une variante simple, l'étape référencée 22 met en oeuvre l'algorithme de traitement par élimination illustré en figure 7, qui permet la détection des compteurs présentant une forte probabilité de défaillance matérielle. Un tel algorithme est alimenté en entrée par l'ensemble {Cij_dys} référencé 60 des compteurs présentant un dysfonctionnement de communication et permet, au fil des étapes référencées E1 à E7, d'éliminer tous les compteurs de ce corpus 60 pour lesquels il existe une cause extérieure de dysfonctionnement, ou une perturbation qui pourrait expliquer l'absence ou le dysfonctionnement de communication. L'ensemble {Cij_dys} référencé 60 comprend par exemple tous les compteurs du réseau de distribution qui sont non collectant depuis plus de soixante jours (i.e. qui n'ont pas transmis d'index de consommation de l'installation cliente à laquelle ils appartiennent au système d'information central depuis plus de soixante jours). Dans un autre mode de réalisation, cet ensemble 60 peut comprendre tous les compteurs non collectant depuis plus de quinze jours, ce qui représente un plus grand volume de données à traiter, mais permet d'optimiser le fonctionnement du parc de compteurs.

A l'issue de l'étape E7, on obtient l'ensemble {Cij_def} référencé 70 des compteurs isolés sur leur grappe, avec des matériels voisins fonctionnant convenablement, sans raison évidente de non communication. Ils sont alors suspectés de défaillance matérielle.

L'algorithme de défaillance compteur de la figure 7 est appliqué par exemple tous les jours sur l'ensemble du parc de compteurs afin de disposer quotidiennement de la liste des compteurs suspectés de défaillance matérielle. On considère par exemple que l'algorithme de la figure 7 est exécuté par le processeur CPU du système d'information central au jour noté JOUR_REF.

Au cours de l'étape E1, le système d'information central collecte la liste des compteurs non collectant depuis plus de soixante jours à JOUR_REF avec certaines de leurs caractéristiques, telles que :
- un identifiant du concentrateur de référence ;
- un identifiant du concentrateur communicant avec le compteur (qui peut être différent du concentrateur de référence) ;
- un identifiant du raccordement 17 ;
- un identifiant du tronçon 16 ;
- Date de réconciliation (i.e. date de convergence des données remontées par le compteur via le lien communicant et des données saisies dans le système d'information central pour ce compteur par un technicien) du compteur ;
- Indicateur d'une collecte dans le passé ;
- Date de la dernière collecte ;
- Date de la première collecte ;
- Date de pose du compteur ;
- Date de pose du concentrateur ;
- Génération CPL du compteur ;
- Génération CPL du concentrateur.

Ces données sont triées et analysées pour identifier, au sein de l'ensemble {Cij_dys} référencé 60, les compteurs silencieux, c'est-à-dire réconciliés, avec une date de première collecte non vide et antérieure à JOUR_REF-60 jours : ils alimentent une étape référencée E2. Les compteurs exclus lors de cette identification sont conservés dans une liste de compteurs non-silencieux {Cij_Typ1} référencée 61, optionnellement avec la raison de cette exclusion.

Au cours de l'étape E2, le CPU du système d'information central analyse l'éligibilité à la défaillance de la liste de compteurs reçue en provenance de l'étape E1. Pour qu'un compteur de cette liste soit éligible à la défaillance, il doit respecter les conditions suivantes :
- identifiant du concentrateur de référence non vide et différent de '0' ;
- identifiant de la ligne non vide et différent de '0' ;
- identifiant du départ 14 non vide et différent de '0' ;
- identifiant du tronçon 16 non vide et différent de '0' ;
- Génération CPL du compteur et génération CPL du concentrateur non nulles et identiques ;
- Date de pose du concentrateur strictement inférieure à JOUR_REF - 5 jours ;
- Date de dépose du compteur vide ou postérieure à JOUR_REF.

Les compteurs éligibles à la défaillance à l'issue de l'étape de traitement E2 alimentent l'étape de traitement E3. Les compteurs non éligibles à la défaillance sont conservés dans une liste de compteurs non éligibles à la défaillance {Cij_Typ2} référencée 62, optionnellement avec la raison de leur non-éligibilité.

Par ailleurs, les compteurs à forte probabilité de défaillance pour JOUR_REF - 1 jour sont importés. Si à JOUR_REF, certains compteurs ne sont plus suspectés de défaillance alors qu'ils l'étaient la veille, on étudie la raison de sortie de défaillance. Dans certains cas précis, on rattrape alors les compteurs pour les conserver dans la liste des défaillants traitée au long des étapes E2 à E7, car la cause de leur sortie n'est pas imputable au compteur. Par exemple, si un compteur était défaillant la veille, il n'y a pas de raison pour qu'il ne le soit plus à JOUR_REF car son concentrateur a eu des performances de collecte trop faibles.

Pour chaque niveau d'analyse E2 à E7 permettant l'exclusion de compteurs de la liste des potentiels défaillants, on alimente une liste référencée 63 des compteurs qui sortent de la défaillance (EXIT_DEF) et une liste 62 des compteurs qui sont simplement exclus de la défaillance, optionnellement avec la raison de la sortie ou de l'exclusion.

Pour les compteurs défaillants à JOUR_REF - 1 jour et non défaillant à JOUR_REF, on vérifie la collecte ou la non collecte depuis plus de soixante jours à partir des données collectées par le système d'information central. Si, pour un compteur, on relève un nombre de jours de collecte consécutifs supérieur ou égal à 1, ou un nombre de jours de non collecte consécutifs inférieur à soixante, on l'ajoute à la liste 63 des sorties de défaillance.

De même si un compteur défaillant à JOUR_REF - 1 jour est non défaillant à JOUR_REF en raison d'une date de dépose antérieure à JOUR_REF, on l'ajoute à la liste 63 des sorties de défaillance.

Au cours d'une étape référencée E3, on étudie ensuite les grappes sur lesquelles sont rattachés les compteurs suspectés de défaillance en sortie d'étape E2, afin de s'assurer qu'ils sont dans un environnement performant.

Pour conserver un compteur dans la liste des potentiels défaillants, on vérifie alors le respect d'au moins une des conditions suivantes :
- Sur la ligne : au moins cinq compteurs et un seul compteur n'ayant pas collecté à JOUR_REF - 1 jour ;
- Sur le départ : au moins cinq compteurs et un seul compteur n'ayant pas collecté à JOUR_REF - 1 jour ;
- Sur le tronçon : au moins cinq compteurs et un seul compteur n'ayant pas collecté à JOUR_REF - 1 jour ;
- Sur le raccordement : au moins cinq compteurs et plus de 80% des compteurs du raccordement ayant collecté à JOUR_REF ou à JOUR_REF - 1 jour.

Selon leur état de la veille, les compteurs qui ne respectent aucune des conditions précédentes sont ajoutés à la liste 63 des sorties de défaillance ou à la liste 62 des exclusions de défaillance.

Au cours d'une étape référencée E4, on vérifie, pour chaque concentrateur, le nombre de compteurs ayant arrêté de collecter à la même date. Ainsi, si plusieurs compteurs ont arrêté de collecter le même jour, on les élimine de la liste des compteurs suspectés de défaillance qui alimente l'étape suivante E5. Selon leur état de la veille, les compteurs qui présentent des arrêts simultanés sont ajoutés à la liste 63 des sorties de défaillance ou à la liste 62 des exclusions de défaillance.

Au cours d'une étape référencée E5, pour chaque compteur suspecté de défaillance constituant une donnée d'entrée de cette étape, on cherche des communications potentielles de ce compteur, qui pourraient entraîner son exclusion de la liste des potentiels défaillants alimentant l'étape suivante E6. Ces communications sont recherchées sur la période [JOUR_REF - 60; JOUR_REF], à partir des données collectées par le système d'information central.

Selon leur état de la veille, les compteurs pour lesquels une communication est constatée (par exemple, une collecte de puissance maximale, ou une télé-opération en succès) sont ajoutés à la liste 63 des sorties de défaillance ou à la liste 62 des exclusions de défaillance.

Au cours d'une étape référencée E6, la liste des compteurs à forte probabilité de défaillance fournie en sortie d'étape E5 est analysée pour identifier des compteurs présentant une coupure au coupe-circuit (CCPI) ou un SMC01 de coupure (Service Métier Comptage 1, service de télé programmation, opéré à distance et permettant d'ouvrir le breaker du compteur) : les compteurs ainsi identifiés sont exclus de la liste des potentiels défaillants fournie en entrée de l'étape suivante E7.

Selon leur état de la veille, les compteurs entachés de suspicion de coupure sont ajoutés à la liste 63 des sorties de défaillance ou à la liste 62 des exclusions de défaillance.

Au cours d'une étape référencée E7, pour chaque Point de Référence Mesure (PRM - suite de chiffres qui identifie une installation cliente sur le réseau de distribution électrique) pour lequel une défaillance du compteur est suspectée en sortie de l'étape E6, on vérifie qu'il n'y a pas eu de changement de compteur : si on trouve sur le même PRM l'existence d'un autre compteur à une date postérieure à la date de pose du compteur initial et au statut 'NEUF', alors le PRM et les compteurs sont exclus de la liste des défaillants délivrée en sortie de l'étape E7. L'existence des différents compteurs sur les PRM, la date de pose et le statut des compteurs font partie des données collectées par le système d'information central.

Selon leur état de la veille, les compteurs exclus pour cause de changement sur le PRM sont ajoutés à la liste 63 des sorties de défaillance ou à la liste 62 des exclusions de défaillance.

Enfin, comme symbolisé par la flèche référencée 64, on procède à un rattrapage de compteurs défaillants : les compteurs figurant dans la liste 63 de sortie de la défaillance pour cause de contexte (étape E3) ou de SMC01 de coupure (étape E6), sont réintégrés dans la liste 70 {Cij_def} des compteurs à forte probabilité de défaillance pour JOUR_REF.

En variante, chaque compteur de la liste 62 des exclusions de défaillance est enregistré en association avec une raison d'exclusion de défaillance, telle qu'identifiée au cours de l'une des étapes E2 à E7, permettant d'identifier une typologie de dysfonctionnement du compteur.

Lors de l'étape référencée 23 de la figure 3, cette typologie de dysfonctionnement peut être restituée à un utilisateur sur une IHM ; en variante, cette restitution peut consister à fournir simplement une information de forte probabilité de défaillance matérielle pour les compteurs concernés de la liste 70 {Cij_def}.

Par exemple, cette IHM prend la forme d'une application web, qu'un utilisateur peut interroger à partir d'un identifiant de compteur, de concentrateur, ou de poste de transformation du réseau de distribution. L'affichage de restitution peut prendre la forme d'une cartographie du réseau de distribution, sur laquelle ces différents équipements sont signalés, en association avec certaines de leurs caractéristiques. L'utilisateur peut par exemple accéder à une fiche détaillée pour chacun des compteurs, listant des données telles que son statut, sa date de pose, son identifiant de ligne, le type de matériel, l'identifiant de son concentrateur, une éventuelle date d'intervention planifiée... De plus, cette fiche indique pour chaque compteur :
- un indicateur de télé-opérabilité (excellente, bonne, moyenne ou médiocre) tel que déterminé au cours de l'étape référencée 21 de la figure 3 ;
- une probabilité de défaillance matérielle (ou une typologie de dysfonctionnement), telle que déterminée au cours de l'étape référencée 22 de la figure 3.

L'utilisateur peut alors exploiter ces deux indicateurs pour définir l'activité de maintenance du parc de compteurs, en ciblant au plus juste les interventions de maintenance et en limitant les actions inutiles, donc les pertes de temps, d'argent et de carburant associées. Ces indicateurs peuvent aussi être utilisés pour orienter au mieux le traitement des demandes d'intervention des clients, à distance ou en local : ils permettent ainsi de limiter les déplacements des techniciens de maintenance et d'améliorer la satisfaction client.

### Application industrielle

Les présentes solutions techniques peuvent trouver à s'appliquer dans tout type de réseau de distribution électrique comprenant des capteurs communicants.

### Liste des signes de référence

1 : chaîne communicante ;
2 : système d'information central ;
3 : IHM ;
10 : poste de transformation HTA/BT ;
11 : transformateur HTA/BT ;
12 : arrivée HTA ;
13 : dipôle source BT ;
14 : tableau BT ;
15 : départ BT ;
16 : tronçon BT ;
17 : branchement ;
18 : raccordement ;
Ki : concentrateur i ;
Cij : compteur j de la grappe i ;
Vij : variables représentatives d'un lien de communication du compteur Cij ;
D_{ctxt}(ij) : données contextuelles relatives au compteur Cij ;
20 : corpus de compteurs {Cij} ;
21 : algorithme de détermination d'une probabilité de succès de télé-opération ;
22 : algorithme de détermination d'une typologie de dysfonctionnement ;
23 : IHM ;
30 : courbe de sensibilité de détection des échecs ;
31 : courbe de précision de détection des échecs ;
32 : seuil d'échec ;
40 : courbe de précision de détection des succès ;
41 : courbe de sensibilité de détection des succès ;
42 : seuil de succès ;
43 : seuil de probabilité excellente ;
60 : corpus {Cij_dys} de compteurs présentant un dysfonctionnement de communication ;
61 : liste de compteurs non-silencieux ;
62 : liste de compteurs exclus de défaillance matérielle ;
63 : liste des compteurs sortis de défaillance ;
64 : rattrapage des compteurs défaillants ;
70 : liste des compteurs à forte probabilité de défaillance matérielle ;
E1 : collecte de données contextuelles et exclusion de compteurs non-silencieux
E2 : analyse d'éligibilité à la défaillance ;
E3 : analyse d'environnement contextuel ;
E4 : recherche d'arrêts simultanés sur une grappe ;
E5 : analyse des communications ;
E6 : recherche de SMC01 de coupure ;
E7 : recherche de changement de compteur.

## Revendications

1. Procédé d'aide à la priorisation d'interventions de maintenance dans un réseau de distribution électrique, mis en oeuvre par des moyens informatiques (2), ledit réseau de distribution électrique comprenant une pluralité de capteurs (Cij) aptes à communiquer au sein dudit réseau, comprenant:
a. une détermination (21), pour au moins un capteur de ladite pluralité de capteurs, d'une valeur de probabilité de succès d'une intervention de maintenance à distance sur ledit au moins un capteur, à partir d'un modèle de prédiction alimenté par une pluralité de variables (Vij) représentatives d'un lien de communication dudit au moins capteur au sein dudit réseau ;
b. pour au moins un capteur de ladite pluralité de capteurs présentant un dysfonctionnement de communication, une collecte de données contextuelles (D_{ctxt}(ij)) relatives audit capteur ;
c. une analyse (22) desdites données contextuelles collectées pour affecter, audit capteur présentant un dysfonctionnement de communication, une typologie de dysfonctionnement, en fonction desdites données contextuelles analysées ;
d. une transmission, à destination d'une interface homme-machine (23), de ladite valeur de probabilité de succès d'intervention à distance et de ladite typologie de dysfonctionnement affectée audit au moins un capteur, pour restitution à un humain pour décider d'au moins une intervention de maintenance prioritaire sur l'un au moins des capteurs de ladite pluralité de capteurs.

2. Procédé selon la revendication 1, **caractérisé en ce que** lesdites variables (Vij) représentatives d'un lien de communication dudit au moins un capteur appartiennent au groupe comprenant :
- des variables d'état dudit au moins un capteur au sein dudit réseau ;
- des variables d'état d'un concentrateur (Ki) auquel est rattaché ledit au moins un capteur au sein dudit réseau ;
- des variable d'état d'un lien communicant entre ledit au moins un capteur et ledit concentrateur auquel il est rattaché ;
- des variables de collecte dudit au moins un capteur ;
- des variables de collecte dudit concentrateur auquel est rattaché ledit au moins un capteur ;
- des variables de découverte dudit au moins un capteur au sein d'un réseau local de communication avec ledit concentrateur auquel il est rattaché ;
- des variables de redémarrage dudit concentrateur auquel est rattaché ledit au moins un capteur ;
- des variables représentatives d'une couverture radio du réseau de communication étendu auquel appartient ledit concentrateur auquel est rattaché ledit au moins un capteur.

3. Procédé selon l'une quelconque des revendications 1 et 2, **caractérisé en ce que** ladite valeur de probabilité de succès d'une intervention de maintenance à distance est un indicateur de télé-opérabilité apte à prendre une valeur parmi :
- une valeur de télé-opérabilité médiocre ;
- une valeur de télé-opérabilité moyenne ;
- une valeur de télé-opérabilité bonne ;
- une valeur de télé-opérabilité excellente.

4. Procédé selon l'une quelconque des revendications 1 à 3, **caractérisé en ce que** ladite analyse (22) desdites données contextuelles collectées met en oeuvre un algorithme par élimination à partir d'un corpus (60) de capteurs présentant un dysfonctionnement de communication, et **en ce que** l'une desdites typologies de dysfonctionnement délivrée en sortie dudit algorithme est une probabilité de défaillance matérielle dudit au moins un capteur.

5. Procédé selon la revendication 4, **caractérisé en ce que** ledit corpus (60) de capteurs comprend l'ensemble des capteurs non-collectant depuis un nombre de jours déterminé.

6. Procédé selon la revendication 5, **caractérisé en ce que** lesdites données contextuelles collectées appartiennent au groupe comprenant :
- des données relatives à une performance de communication de capteurs d'une grappe de capteurs à laquelle appartient ledit au moins un capteur présentant un dysfonctionnement de communication ;
- des données relatives à au moins un événement de communication dudit au moins un capteur survenu au cours dudit nombre de jours déterminé ;
- des données relatives à une situation contractuelle dudit au moins un capteur présentant un dysfonctionnement de communication ;
- des données relatives à une intervention matérielle sur ledit au moins un capteur présentant un dysfonctionnement de communication.

7. Procédé selon l'une quelconque des revendications 1 à 6, **caractérisé en ce que** lesdits capteurs sont des compteurs électriques communicants.

8. Système informatique (2) d'aide à la priorisation d'interventions de maintenance dans un réseau de distribution électrique, ledit réseau de distribution électrique comprenant une pluralité de capteurs (Cij) aptes à communiquer au sein dudit réseau, ledit système informatique comprenant au moins un processeur (CPU) configuré pour exécuter des étapes de :
a. détermination (21), pour au moins un capteur de ladite pluralité de capteurs, d'une valeur de probabilité de succès d'une intervention de maintenance à distance sur ledit au moins un capteur, à partir d'un modèle de prédiction alimenté par une pluralité de variables représentatives d'un lien de communication dudit au moins capteur au sein dudit réseau ;
b. collecte de données contextuelles relatives à au moins un capteur de ladite pluralité de capteurs présentant un dysfonctionnement de communication ;
c. analyse (22) desdites données contextuelles collectées pour affecter, audit capteur présentant un dysfonctionnement de communication, une typologie de dysfonctionnement, en fonction desdites données contextuelles analysées ;
d. transmission, à destination d'une interface homme-machine (23), de ladite valeur de probabilité de succès d'intervention à distance et de ladite typologie de dysfonctionnement affectée audit au moins un capteur, pour restitution à un humain pour décider d'au moins une intervention de maintenance prioritaire sur l'un au moins des capteurs de ladite pluralité de capteurs.

9. Programme informatique comportant des instructions pour la mise en oeuvre du procédé selon l'une des revendications 1 à 7 lorsque ce programme est exécuté par un processeur.

10. Support d'enregistrement non transitoire lisible par un ordinateur sur lequel est enregistré un programme pour la mise en oeuvre du procédé selon l'une des revendications 1 à 7 lorsque ce programme est exécuté par un processeur.
